# Europäisches Patentamt
# European Patent Office
# Office européen des brevets

(19)

(11) Publication number : **0 378 532 B1**

(12) # EUROPEAN PATENT SPECIFICATION

(45) Date of publication of patent specification :
29.07.92 Bulletin 92/31

(51) Int. Cl.⁵ : **H02J 7/06**

(21) Application number : **88903800.6**

(22) Date of filing : **14.04.88**

(86) International application number :
**PCT/EP88/00327**

(87) International publication number :
**WO 88/09075 17.11.88 Gazette 88/25**

(54) **CIRCUIT TO INHIBIT VOLTAGE AND CURRENT RETURNS TO THE ELECTRIC POWER DISTRIBUTION LINE IN AN INVERTER-TYPE POWER PLANT.**

(30) Priority : **14.05.87 IT 2051187**

(43) Date of publication of application :
**25.07.90 Bulletin 90/30**

(45) Publication of the grant of the patent :
**29.07.92 Bulletin 92/31**

(84) Designated Contracting States :
**DE FR GB SE**

(56) References cited :
FR-A- 2 271 711
GB-A- 2 160 722
US-A- 4 104 539
US-A- 4 471 233

(73) Proprietor : **ITALTEL SOCIETA ITALIANA TELECOMUNICAZIONI s.p.a.**
**P.le Zavattari, 12**
**I-20149 Milano (IT)**

(72) Inventor : **LENTINI, Salvatore**
**Via TS 12, 2**
**I-90147 Palermo (IT)**
Inventor : **PATTI, Giuseppe**
**Via Vincenzo Di Marco, 8**
**I-90143 Palermo (IT)**

(74) Representative : **Giustini, Delio**
**c/o Italtel Società Italiana Telecomunicazioni s.p.a. P.O. Box 10**
**I-20019 Settimo Milanese (MI) (IT)**

Jouve, 18, rue Saint-Denis, 75001 PARIS

EP 0 378 532 B1

## Description

The present invention refers to a circuit suitable to inhibit voltage and current returns to the distribution line in an inverter-type power plant which uses said distribution line as stand-by unit to which the load is switched in presence of faults in one or more inverters or in presence of an overload condition caused for example by a fault in the utilizing units.

As known, the inverters are suitable to receive a direct voltage at their input and to make available at their output an alternating voltage which feeds a load.

The power plants of said type comprise one or more inverters, connected in parallel, as well as one or more stand-by inverters or the electric distribution line as stand-by unit.

Said power plants are then used to feed systems which require a high degree of reliability and it is therefore necessary to provide working and stand-by devices, as well as supervisory means

The present invention can be applied when the electric distribution line is used as stand-by unit.

In particular, when the supervisory means detect the presence of faults in the working devices they provide the disengagement of a first set of static switches which, by assuming the condition of "open switches", cause the sectioning of the connection between the load and the working devices. Said static switches may be centralized (located on the multiple unit which connects the parallel of the inverters to the utilizing units) or remotely located (i.e. in cascade to each inverter). At the same time the supervisory means release a second set of static switches which, by assuming the condition of "closed switches" connect the load to the distribution line which is the stand-by unit, as specified above. During the normal operation (load is fed by inverters) and due to a fault in the sistem, it is possible that the second set of static switches unduly assume the configuration of "closed switches" and connect in this way the distribution line to the inverters. Said fault causes both accident prevention and handling problems.

The problems relating to the accident prevention arise when the faults mentioned above occur and determine voltage and current returns to the electric distribution line.

When said faults occur during a maintenance operation (subsequent for example to a sectioning operation of a network section which is therefore insulated from the power generators located upstream from the network section interested), problems relative to the accident prevention may arise, as the personnel works in the conviction that the mains is not connected to any power source.

The handling problems arise in presence of conditions similar to the above (load feeded by inverters and with a fault in the second set of static switches) and they are caused by a power transfer to the distribution line in the absence of any contractual regulations suitable to control said transfer.

The units which arrange the electric energy distribution do not usually allow the direct parallel connection between the network and a set of inverters, except when a specific contractual regulation is provided and adequate technical means for the execution of said operation are arranged.

In the known power plants, due to faults in the static switches and/or in the supervisory means, the voltage and current returns to the electric distribution line is inhibited by a current return device connected in series to the electric distribution line. As known, said devices are adequate to carry out a sectioning on said line when they detect an energy transfer in the direction opposite to the normal working direction. A current return device, named "reverse power flow blocking and sensing" is shown in the figures of US-A-4.104.539 and shortly disclosed on column 6, lines 60 to 66 of the relevant description. Said devices are too expensive and have an operating time too high. They are therefore suitable to solve the handling problems cited above, but are not adequate to solve the problems connected to the accident prevention, as the personnel usually intervenes when the sectioning has been already carried out: no current therefore flows and said current return device may not operate. In fact, as the operating time of these devices is too high, the sectioning of the connection may be not effected-(if the current intensity of the human body is inferior to the operating current) or may be effected when the accident has already occured.

The known devices are not fit therefore to solve problems of accident prevention nature and caused by voltage returns to the electric distribution line.

Purpose of the present invention is a circuit, particularly simple, reliable and cheap, suitable to solve the problems connected both with the accident prevention and the handling, as stated above. Object of the present invention is therefore a circuit for the inhibition of voltage and current returns to the electric distribution line, particularly suitable for the application in inverter-type power plants comprising:

- one or more inverters connected in parallel which feed a load over a first set of static switches;
- first sectioning means for the connection of the load to the electric distribution line through a second set of static switches;
- supervisory means suitable to activate the first set of static switches, respectively the second set of static switches, depending on the inverters condition, on that of the load to be fed and on that of the electric distribution line.

The circuit comprises:

- an electric probe (SE) at the output of which a voltage or a current is available when a current return to the electric distribution line (RD) is detected;

– a ballast impedance (I) causing a return current through the electric probe (SE) when the second set of static switches ($DC_3$, $DC_4$) assumes the condition of "closed circuit" due to a fault;

– and an energizing circuit (E) of the first sectioning means ($S_1$) activated by the voltage or current signal at the output of the probe (SE) controlled by the contacts of a second sectioning means ($S_2$) operated by the supervisory control means (SM).

When the load is fed by said set of inverters and in presence of a fault in the second set of static switches, even when the distribution line section joined to the power plant is sectioned and therefore without any load, the same current which flows through said ballast impedance (preferably capacitive or inductive type) flows through the electric branch downstream from the first sectioning means. Said current flow is detected by the electric probe, at the ends of which a voltage or a current is available and the current flows therefore through the energizing circuit of the first sectioning means.

These latter disengage the power plant from the distribution line, avoiding in this way the accident prevention and handling problems mentioned above.

Further characteristics of the circuit can be taken from the following description which refers to a non-limiting example shown in the following drawings, whereas:

– Figure 1 shows a single-phase power plant, including a first embodiment of the circuit object of the invention;

– Figure 2 shows the same power plant under 1, including a second embodiment of the circuit object of the invention;

– Figure 3 shows a three phase power plant including said first embodiment of the circuit.

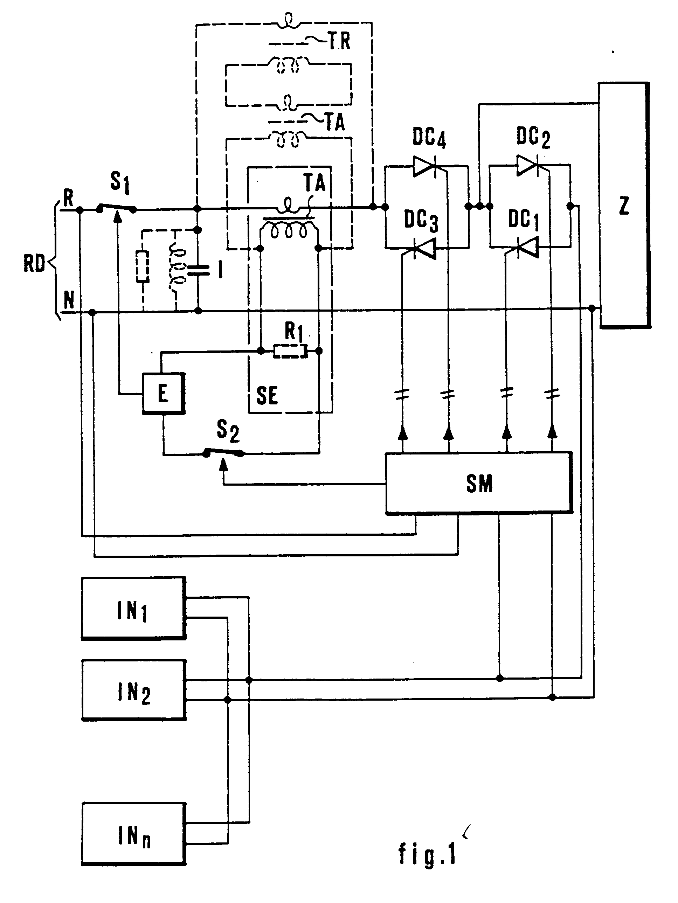

The power plant of Figure 1 is so shaped as to include:

– a plurality of inverters $IN_1$, $IN_2$, ....., $IN_n$, connected in parallel;

– a first set of static switches, composed by two monitored diodes $DC_1$ and $DC_2$, which are jointly released by supervisory means and are opposite connected so as an alternating current may flow through them;

– a second set of static switches composed by two monitored diodes $DC_3$ and $DC_4$, which are jointly released by the supervisory means so as an alternating current may flow;

– first sectioning means $S_1$ suitable to connect the electric distribution line RD - at wires R and N – to the second set of static switches ($DC_3$ and $DC_4$);

– supervisory means SM suitable to verify predetermined parameters (for example, amplitude, phase, etc.) of the voltage available at the output both of the inverters N and of the line RD and further suitable to provide the supply of the load Z through inverters IN, i.e. through the distribution line RD and further fit to monitor the closing and opening of the second sectioning means $S_2$. The circuit comprises:

– an electric probe (SE) at the output of which a voltage or a current is available when a current return to the electric distribution line (RD) is detected;

– a ballast impedance (I) causing a return current through the electric probe (SE) when the second set of static switches ($DC_3$, $DC_4$) assumes the condition of "closed circuit" due to a fault;

– and an energizing circuit (E) of the first sectioning means ($S_1$) activated by the voltage or current signal at the output of the probe (SE) through the contacts of a second sectioning means ($S_2$) controlled by the supervisory control means (SM).

When the load is fed by the inverters IN the supervisory SM shall:

– release the diodes $DC_1$ and $DC_2$;

– disengage the diodes $DC_3$ and $DC_4$;

– cause the closing of the contacts of the second sectioning means $S_2$.

When no faults in the diodes $DC_3$ and $DC_4$ are found, they assume the condition of "open circuit" and inhibit voltage or current returns to the electric distribution line RD. Under these conditions no current flows through the probe SE and the contacts of the sectioning means $S_1$ are therefore closed.

When a fault in the diodes $DC_3$ and $DC_4$ (or their control circuits) occurs, they assume the condition of "closed circuit", causing voltage and current returns to the distribution line RD as well as problems connected to the accident prevention in the absence of the circuit object of the present invention.

In this case an alternate voltage is available at the ends of the electric probe SE, which causes the flow of the current through the energizing circuit E of the sectioning means $S_1$; an opening of the relative contacts is therefore registered, by inhibiting in this way any voltage or current returns.

According to a preferential embodiment of the invention, the ballast impedance I is of reactive type (preferably capacitive or inductive) in order not to dissipate active power.

It is further possible to use a resistive impedance or a combination of the above impedances.

It is useful to point out that, when a separator transformer or other impedance, concentrated or distributed, is provided between the distribution line and the load, an additional concentrated ballast impedance I can be missing if the current absorbed by said other impedance, or the magnetizing current of the separator transformer are sufficient to cause the energizing of the means $S_1$ and the opening of the relative contacts.

In fact, in the above circuits the ballast impedance I is constituted by said other impedance or by the distributed impedance of said separator transformer.

The circuit according to the invention is suitable to cause the opening of the contacts of the means $S_1$ even when the network section joined to the power plant has been sectioned in order to allow the maintenance operations. In fact, when a fault in the diodes $DC_3$ and $DC_4$ is found, a reactive current is registered, caused by said ballast impedance I, which - if of reactive type - does not involve active energy dissipation and causes the opening of the means $S_1$ independently from the condition of the knife switches arranged upstream from the network section under maintenance.

It is further possible to use an energizing circuit of the first sectioning means monitored by a current instead of by a voltage as illustrated in Fig. 1. In this case the resistance $R_1$ provided in the electric probe SE is not essential.

It is necessary to point out that said electric mesh may assume configurations which differ from what is described above (for example, the second sectioning means are arranged in parallel to the energizing circuit of the first sectioning means), that are however based on the same principle according which the second sectioning means $S_2$ influence the activation of the first sectioning means $S_1$ through the mesh opening, i.e. by causing a short circuit of some of the mesh elements.

It is further to note that, as illustrated in Fig. 1 with a dotted line, the electric probe SE may indirectly detect a current flow through the electric distribution line RD. It is possible in particular to connect to the distribution line RD the primary winding of a step-down transformer TR, to the secondary winding of which the above transformer TA is connected.

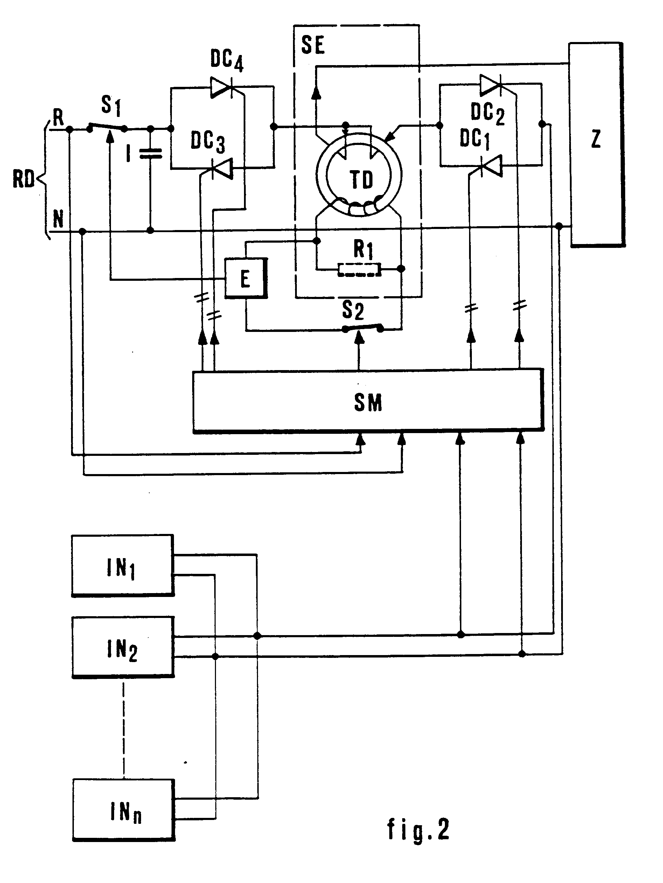

Fig. 2 shows a second embodiment of the invention, where the electric probe SE replaces the transformer TA mentioned above and provides the presence of a differential transformer TD, having:
- a first winding through which the current produced by the inverters flows;
- a second winding through which the current for the load flows;
- a third winding through which the current flows when (in presence of a fault in the diodes $DC_3$ and/or $DC_4$) the value of the current emitted by the inverters differs from the value of the current which comes to the load.

During the normal operation (load is fed by the inverters), in the absence of a fault in the diodes $DC_3$ and $DC_4$ on the third winding of TD, no current flows as the magnetic streams originated by the currents which flow through the first and the second winding are equal and opposite at the same time and therefore they annul each other.

When a fault in said diodes $DC_3$ and $DC_4$ is regis-

tered, part of the current produced by the inverters comes to the electric distribution line RD as well as to the ballast impedance I and the value of the current which flows through the first winding therefore differs from the value of the current which flows through the second winding. The magnetic streams originated by said currents do not annull therefore each other completely, and on the third winding a current is induced, which causes the activation of the sectioning means $S_1$ according to procedures similar to those illustrated for the first embodiment of the invention.

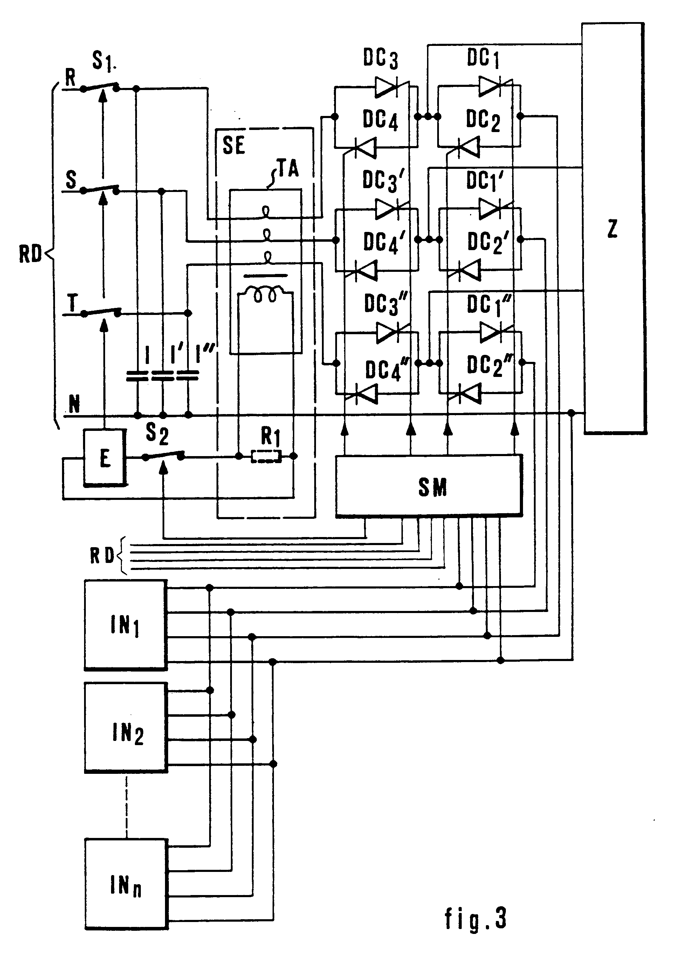

Figure 3 shows a three-phase type power plant including said first embodiment of the circuit according to the invention.

In addition to the neutral wire N and to the phase R - present in the single-phase power plants - there are the wires S and T. The first sectioning means $S_1$, the first set of static switches $DC_1$ and $DC_2$, the second set of static switches $DC_3$ and $DC_4$, the primary winding of transformer TS and the ballast impedance I are constituted by three functional units instead of one unit as illustrated in Figure 1.

The second embodiment of the circuit arrangement according to the invention is not illustrated making reference to the three-phase power plant, as the relative diagram may be easily composed if the principles taken from Fig. 2 are applied to the diagram of Fig. 3.

On the base of what above stated and according to the figures mentioned, the circuit meets the requirements stated in the invention and it is simple, reliable, cheap and may be applied both to the single-phase and to three-phase power plants.

## Claims

1. Circuit for the inhibition of voltage and current returns to the electric distribution line (RD), particularly suitable for application in inverter-type power plants, including:
- one or more inverters ($IN_1,...,IN_n$) connected in parallel and feeding a load through a first set of static switches ($DC_1$, $DC_2$);
- first sectioning means ($S_1$) suitable to connect the load (Z) to the electric distribution line (RD) through a second set of static switches ($DC_3$, $DC_4$);
- supervisory control means (SM) suitable to activate the first set of static switches ($DC_1$, $DC_2$), respectively the second set of static switches ($DC_3$, $DC_4$), dependent on the condition of the inverters, V, on that of the load (Z) to be fed and on that of said electric distribution line (RD);
characterized in that the circuit comprises:
- an electric probe (SE) at the output of which a voltage or a current is available when a current return to the electric distribution line (RD) is detected;

– a ballast impedance (I) causing a return current through the electric probe (SE) when the second set of static switches (DC$_3$, DC$_4$) assumes the condition of "closed circuit" due to a fault;

– and an energizing circuit (E) of the first sectioning means (S$_1$) activated by the voltage or current signal at the output of the probe (SE) controlled by contacts of a second sectioning means (S$_2$) operated by the supervisory control means (SM).

2. Circuit as claimed under claim 1, characterized in that said electric probe (SE) is suitable to control said energizing circuit (E) through current and it is composed by a transformer (TA) having its primary winding connected in series to the electric distribution line (RD).

3. Ciruit as claimed under claim 1, characterized in that said electric probe (SE) is suitable to control said energizing circuit (E) through voltage and it is constituted by a transformer (TA) having its secondary winding connected to the ends of a resistance (R$_1$).

4. Circuit as claimed under claims 2 or 3, characterized in that said transformer (TA) is connected to the electric distribution line (RD) over an additional transformer (TR).

5. Circuit as claimed under claim 1, characterized in that said electric probe (SE) is constituted by a transformer (TD) having:

– a first winding fed by the current produced by said inverters (IN);

– a second winding fed by the current which feeds the load (Z);

– a third winding fed by a current having a value equal to the difference between the currents which flow through the first and second windings.

6. Circuit as claimed under claim 5, characterized in that a resistance (R$_1$) is connected to the ends of the third winding.

7. Circuit as claimed under claim 1, characterized in that said ballast impedance (I) is of reactive type.

8. Circuit as claimed under claim 1 characterized in that said ballast impedance (I) is composed by the impedance of the secondary winding in a separator transformer.


**Patentansprüche**

1. Kreis zur Verhinderung von Spannungs- und Stromrückführungen in die elektrische Verteilungsleitung (RD), besonders für die Anwendung in Stromrichteranlage geeignet, folgendes umfassend:

– einen oder mehrere Stromrichter (IN$_1$, ..., IN$_n$) mit Parallelschaltung, zur Versorgung einer Last durch einen ersten Satz von statischen Schaltern (DC$_1$, DC$_2$);

– erste Trennmittel (S$_1$), geeignet zum Anschließ-

en der Last (Z) mit der elektrischen Verteilungsleitung (RD) durch einen zweiten Satz von statischen Schaltern (DC$_3$, DC$_4$);

– Ueberwachungseinheiten (SM), geeignet zum Anregen des ersten Satzes statischer Schalter (DC$_1$, DC$_2$), bzw. des zweiten Satzes statischer Schalter (DC$_3$, DC$_4$), unter Berücksichtigung des Zustandes der Stromrichter, des Zustandes der einzuspeisenden Last (Z) und des Zustandes der genannten elektrischen verteilungsleitung (RD); davon gekennzeichnet, daß der Kreis folgendes umfaßt:

– eine elektrische Sonde (SE) am Ausgang, wo Spannung oder Strom verfügbar ist, wenn die Stromrückführung zu der elektrischen Verteilungsleitung (RD) festgestellt wird;

– eine Ballastimpedanz (I), welche einen Rückstrom durch die elektrische Sonde (SE) verursacht, wenn der zweite Satz statischer Schalter (DC$_3$, DC$_4$) den Zustand von "geschlossenem Kreis" wegen einer Störung erhält;

– und einen Erregerkreis (E) des ersten Trennmittels(S$_1$), der von dem Spannungs- oder Stromsignal am Ausgang der Sonde (SE) erregt wird, von den Kontakten des zweiten Trennmittels (S$_2$) gesteuert wird, von den Ueberwachungseinheiten (SM) in Betrieb gesetzt wird.

2. Kreis wie im Anspruch 1, davon gekennzeichnet, daß die genannte elektrische Sonde (SE) zur Steuerung des genannten Erregerkreises (E) durch Strom geeignet ist; er besteht aus einem Wandler (TA), dessen Primärwicklung mit der elektrischen Verteilungsleitung (RD) seriengeschaltet ist.

3. Kreis wie im Anspruch 1, davon gekennzeichnet, daß die genannte elektrische Sonde (SE) zur Steuerung des genannten Erregerkreises (E) durch Spannung geeignet ist; er besteht aus einem Wandler (TA), dessen Sekundärwicklung mit den Enden einer Wicklung (R$_1$) geschaltet ist.

4. Kreis wie in den Ansprüchen 2 oder 3, davon gekennzeichnet, daß der genannte Wandler (TA) mit der elektrischen Verteilungsleitung (RD) über einen Zusatzwandler (TR) angeschlossen ist.

5. Kreis wie im Anspruch 1, davon gekennzeichnet, daß die genannte elektrische Sonde (SE) aus einem Wandler (TD) besteht, mit:

– einer ersten Wicklung, die durch von den genannter Stromrichtern (IN) erzeugten Strom versorgt wird;

– einer zweiten Wicklung, die vom Strom versorgt wird, der die Last versorgt (Z)

– einer dritten Wicklung, die von einem Strom versorgt wird, dessen Wert der Differenz zwischen den Strömen entspricht, die durch die ersten und die zweiten Wicklungen fließen

6. Kreis wie im Anspruch 6, davon gekennzeichnet, daß ein Widerstand (R$_1$) mit den Enden der dritten Wicklung angeschlossen ist.

7. Kreis wie im Anspruch 1, davon gekennzeichnet, daß die genannte Ballast-Impedanz (I) reaktiven Types ist

8. Kreis wie im Anspruch 1, davon gekennzeichnet, daß die genannte Ballast-Impedanz (I) aus der Impedanz der Sekundärwicklung in einem Trennwandler besteht.

## Revendications

1. Circuit pour l'inhibition des retours de tension et de courant aux lignes de distributions électriques (RD), spécialement indiqué pour application dans les installations électriques du type à inverseur, comprenant:
   – un ou plusieurs inverseurs ($IN_1$...$IN_N$) connectés en parallèle et alimentant une charge moyennant un premier groupe d'interrupteurs statiques ($DC_1$, $DC_2$)
   – un premier moyen de sectionnement ($S_1$) en mesure de connecter la charge (Z) à la ligne de distributions électrique (RD) à travers un deuxième groupe d'interrupteurs statiques ($DC_3$, $DC_4$)
   – des moyens superviseurs de contrôle (SM) en mesure de mettre en fonction le premier groupe d'interrupteurs statiques ($DC_1$, $DC_2$) et respectivement le deuxième groupe d'interrupteurs statiques ($DC_3$, $DC_4$), conformément à la condition des inverseurs, à la condition de la charge (Z) à alimenter, et à la condition de ladite ligne de distribution électrique (RD),
   caractérisé par le fait que ce circuit comprend:
   – une sonde électrique (SE) à la sortie de laquelle on mesure une tension ou un courant lorsqu'on détecte un retour de courant à la ligne de distribution électrique (RD)
   – une impédance d'autorégulation (I) qui provoque un retour de courant à travers la sonde électrique (SE) lorsque le deuxième groupe d'interrupteurs statiques ($DC_3$, $DC_4$) assume la condition de "circuit fermé" à la suite d'une panne
   – et un circuit d'excitation (E) du premier moyen de sectionnement ($S_1$) mis en fonction par le signal de tension ou de courant à la sortie de la sonde (SE) commandé par les contacts d'un deuxième moyen de sectionnement ($S_2$) activé par les moyens superviseurs de contrôle (SM)

2. Circuit comme il est dit à la revendication 1, caractérisé par le fait que ladite sonde électrique (SE) est apte au contrôle dudut circuit d'excitation (E) au moyen du courant, et il se compose d'un transformateur (TA) dont l'enroulement primaire est connecté en série à la ligne de distribution électrique (RD).

3. Circuit comme il est dit à la revendication 1, caractérisé par le fait que ladite sonde électrique (SE) est apte au contrôle dudit circuit d'excitation (E) au moyen de la tension, et il se compose d'un transformateur (TA) dont l'enroulement secondaire est connecté aux a extrémités d'une résistance ($R_1$)

4. Circuit comme il est dit aux revendications 2 ou 3, caractérisé par le fait que ledit transformateur (TA) est connecté à la ligne de distribution électrique sur le transformateur supplémentaire (TR)

5. Circuit comme il est dit à la revendication 1, caractérisé par le fait que ladite sonde électrique (SE) se compose d'un transformateur (TD) muni de:
   – un premier enroulement alimenté par le courant produit par lesdits inverseurs (IN)
   – un deuxième enroulement alimenté par le courant qui alimente la charge (Z)
   – un troisième enroulement alimenté par un courant dont la valeur est égale à la différence des courants circulant à travers le premier et le deuxième enroulement

6. Circuit comme il est dit à la revendication 5, caractérisé par le fait qu'une résistance ($R_1$) est connectée aux extrémités d'un troisième enroulement

7. Circuit comme il est dit à la revendication 1, caractérisé par le fait que ladite impédance d'autorégulation (1) est du type réactif

8. Circuit comme il est dit à la revendication 1, caractérisé par le fait que ladite impédance d'autorégulation (1) se compose de l'impédance du deuxième enroulement dans un transformateur séparateur.

fig.1

fig.2

fig.3